# EUROPÄISCHE PATENTSCHRIFT

(11) **EP 3 750 236 B1**
(45) Veröffentlichungstag und Bekanntmachung des Hinweises auf die Patenterteilung: **18.11.2026**
(21) Anmeldenummer: 19700146.4
(22) Anmeldetag: 07.01.2019
(51) Int. Cl.: B25F 5/00, H02P 3/12, H02P 3/22, H02P 25/14, B23D 51/16, B27B 5/38

(54) **BREMSVORRICHTUNG UND VERFAHREN ZU EINEM BETRIEB EINER BREMSVORRICHTUNG**
BRAKE SYSTEM AND METHOD FOR OPERATING A BRAKE SYSTEM
SYSTÈME DE FREINAGE ET PROCÉDÉ D'UTILISATION DU SYSTÈME DE FREINAGE

(30) Priorität: 06.02.2018 DE 102018201800
(43) Veröffentlichungstag der Anmeldung: 16.12.2020
(73) Patentinhaber: Robert Bosch GmbH, 70442 Stuttgart (DE)
(72) Erfinder: WIKER, Juergen, 70374 Stuttgart (DE); DENGLER, Klaus, 70806 Kornwestheim (DE); SCHNEIDER, Matthias, 70374 Stuttgart (DE)
(86) Internationale Anmeldenummer: PCT/EP2019/050230
(87) Internationale Veröffentlichungsnummer: WO 2019/154567

(56) Entgegenhaltungen:
- US-A- 3 848 169
- US-A- 5 677 586
- US-A1- 2008 143 283

## Beschreibung

### Stand der Technik

Es ist bereits eine Bremsvorrichtung für einen Elektromotor, welcher zumindest eine Ankerwicklung und zumindest eine Feldwicklung aufweist, mit zumindest einer Steuer- und/oder Regeleinheit zumindest zu einer Steuerung und/oder Regelung zumindest eines elektrischen Stroms durch die Ankerwicklung und/oder durch die Feldwicklung vorgeschlagen worden.

US 5 677 586 A offenbart einen Motor, welcher mit einer Bremsvorrichtung ausgestattet, die das Anhalten seiner Drehung ermöglicht. Diese Bremsvorrichtung besteht aus einem Schaltgerät, das zwischen der Wechselstrom Stromquelle des Motors und dem Anker eingebaut ist. Das Schaltgerät schaltet die elektrischen Verbindungen zwischen den Feldwicklungen, um eine Bremswirkung zu erzeugen. Im Schaltgerät befindet sich ein Schalter, der die elektrischen Verbindungen zwischen den jeweiligen Wicklungen ändert, sobald der Motor gebremst werden soll. Der Schalter verfügt über mehrere Sätze elektrischer Kontakte. In der Motor Lauf Position sind die inneren Feldwicklungen zusammen mit einer äußeren Feldwicklung in Reihe zur anderen äußeren Feldwicklung und zum Anker geschaltet. Wird der Motor gebremst, öffnet der Schalter die elektrische Verbindung zwischen der Stromquelle und den inneren Feldwicklungen sowie der anderen äußeren Feldwicklung.

US 2008/143283 A1 offenbart ein Verfahren zur Regelung des Verhaltens eines dynamischen Bremssystems. Es wird der Feldstrom des Traktions Motors erfasst. Auf Basis dieses gemessenen Feldstroms wird der Feldstrom des Traktions Motors so gesteuert, dass mindestens einer der folgenden Werte konstant bleibt: ein konstanter Ankerstrom, eine konstante Bremswirkung oder ein konstanter Feldstrom.

US 3 848 169 A offenbart die Steuerung einer dynamischen Bremse eines Gleichstrommotors. Zunächst werden zwei elektrische Größen ermittelt: zum einen der Feldstrom und zum anderen entweder der Ankerstrom oder die Drehzahl des Motors. Diese beiden Größen werden anschließend addiert. Ein Feldregler regelt daraufhin den Feldstrom so, dass die Summe der beiden elektrischen Größen im Wesentlichen konstant bleibt.

### Offenbarung der Erfindung

Die Erfindung wird durch die Merkmale der unabhängigen Ansprüche definiert.

Die Erfindung geht aus von einer Bremsvorrichtung für einen Elektromotor, welcher zumindest eine Ankerwicklung und zumindest eine Feldwicklung aufweist, mit zumindest einer Steuer- und/oder Regeleinheit zumindest zu einer Steuerung und/oder Regelung zumindest eines elektrischen Stroms durch die Ankerwicklung und/oder durch die Feldwicklung.

Es wird vorgeschlagen, dass die Steuer- und/oder Regeleinheit dazu vorgesehen ist, bei einer Kurzschlussbremsung des Elektromotors einen durch die Ankerwicklung fließenden elektrischen Ankerstrom zumindest zeitweise zu reduzieren.

Der Elektromotor weist vorzugsweise einen Stator und einen Anker auf. Der Stator ist insbesondere als ein statisches Bauteil ausgebildet, welches insbesondere während eines Betriebs des Elektromotors eigenbewegungsfrei relativ zu dem Anker ist. Der Anker ist vorzugsweise als ein beweglich gelagertes Bauteil, insbesondere als ein rotatorisch beweglich gelagertes Bauteil ausgebildet, welches insbesondere während des Betriebs des Elektromotors relativ zu dem Stator bewegbar, insbesondere drehbar, ist. Vorzugsweise weisen der Stator und der Anker jeweils zumindest einen, vorzugsweise aus einer Vielzahl von miteinander verbundenen Blechschichten, insbesondere Elektroblechschichten, gebildeten, Grundkörper auf. Vorzugsweise weist der Stator die Feldwicklung auf. Vorzugsweise weist der Anker die Ankerwicklung auf. Vorzugsweise sind die Feldwicklung und die Ankerwicklung jeweils aus zumindest einem langgestreckten elektrisch leitfähigen Leitungselement, wie beispielsweise aus einem Draht, aus einem Kabel o. dgl., gebildet. Insbesondere kann das Leitungselement eine elektrisch isolierende Isolationsschicht aufweisen. Vorzugsweise ist das Leitungselement zu einer Bildung der Feldwicklung im Wesentlichen spulenartig um den Grundkörper des Stators gewickelt. Vorzugsweise ist zumindest ein weiteres Leitungselement zur Bildung der Ankerwicklung im Wesentlichen spulenartig um den Grundkörper des Ankers gewickelt. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Der Elektromotor kann insbesondere als ein Innenläufermotor oder als ein Außenläufermotor ausgebildet sein. Vorzugsweise rotiert ein Anker eines Innenläufermotors bei einem Betrieb des Innenläufermotors umgeben von einem Stator des Innenläufermotors. Vorzugsweise umgibt ein Anker eines Außenläufermotors einen Stator des Außenläufermotors und rotiert bei einem Betrieb des Außenläufermotors um den Stator. Bevorzugt ist der Elektromotor als ein Universalmotor ausgebildet. Insbesondere ist der Elektromotor sowohl mit elektrischer Gleichspannung als auch mit elektrischer Wechselspannung betreibbar. Vorzugsweise weist der Elektromotor zumindest ein Kommutatorsystem, insbesondere zu einer korrekten Bestromung der Ankerwicklung, auf. Insbesondere kann der Anker durch eine korrekte Bestromung des Elektromotors in eine Rotation versetzt werden. Insbesondere kann der Elektromotor mittels des rotierenden Ankers beispielsweise eine Antriebswelle einer Werkzeugmaschine o. dgl. antreiben. Zu einer Kurzschlussbremsung des Elektromotors wird vorzugsweise der Elektromotor, insbesondere die Feldwicklung und die Ankerwicklung, elektrisch kurzgeschlossen. Vorzugsweise wirkt bei einem Kurzschluss des Elektromotors eine gegenelektromotorische Kraft, welche insbesondere einen elektrischen Kurzschlussstrom bewirkt. Ein bei einer Kurzschlussbremsung des Elektromotors durch die Ankerwicklung fließender elektrischer Kurzschlussstrom ist insbesondere der elektrische Ankerstrom. Ein bei einer Kurzschlussbremsung des Elektromotors durch die Feldwicklung fließender elektrischer Kurzschlussstrom ist insbesondere ein elektrischer Feldstrom.

Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Die Steuer- und/oder Regeleinheit kann insbesondere als ein Mikroprozessor, als ein Mikrorechner oder als eine andere, einem Fachmann als sinnvoll erscheinende Steuer- und/oder Regeleinheit ausgebildet sein. Grundsätzlich ist vorstellbar, dass die Steuer- und/oder Regeleinheit als ein elektrischer bzw. elektronischer Regelkreis, als ein integrierter Schaltkreis o. dgl. ausgebildet ist. Vorzugsweise ist die Steuer- und/oder Regeleinheit zu einer Steuerung und/oder Regelung der Bestromung des Elektromotors bei einem Betrieb des Elektromotors vorgesehen. Alternativ ist vorstellbar, dass die Steuer- und/oder Regeleinheit lediglich zu einer Steuerung und/oder Regelung einer Kurzschlussbremsung vorgesehen ist. Bevorzugt ist die Steuer- und/oder Regeleinheit dazu vorgesehen, die Kurzschlussbremsung einzuleiten, insbesondere in Abhängigkeit eines Signals, beispielsweise von einem Sensor, von einem Benutzer o. dgl. Die Steuer- und/oder Regeleinheit ist dazu vorgesehen, bei einer Kurzschlussbremsung des Elektromotors eine elektrische Stromstärke des Ankerstroms, zumindest zeitweise zu reduzieren, insbesondere im Vergleich zu einem elektrischen Ankerstrom bei gleichen Betriebsparametern und einer ungeregelten Kurzschlussbremsung des Elektromotors. Die Steuer- und/oder Regeleinheit ist dazu vorgesehen, den elektrischen Ankerstrom zu Beginn der Kurzschlussbremsung zu reduzieren. Bevorzugt ist die Steuer- und/oder Regeleinheit dazu vorgesehen, den elektrischen Ankerstrom zumindest 5 ms lang, besonders bevorzugt zumindest 10 ms lang, ab dem Beginn der Kurzschlussbremsung zu reduzieren. Vorzugsweise kann die Steuer- und/oder Regeleinheit den elektrischen Ankerstrom ab dem Beginn der Kurzschlussbremsung länger als 10 ms lang reduzieren, insbesondere in Abhängigkeit von einer Systemauslegung und/oder einer Antriebsstrangauslegung eines die Bremsvorrichtung umfassenden Geräts. Die Steuer- und/oder Regeleinheit kann den elektrischen Ankerstrom vorzugsweise durch eine Ansteuerung von elektrischen bzw. elektronischen Bauteilen der Bremsvorrichtung, wie beispielsweise Widerständen, Dioden, Kondensatoren, Transistoren, insbesondere MOSFETs und/oder IGBTs, o. dgl., durch eine zumindest teilweise Ableitung des elektrischen Ankerstroms, beispielsweise in einen Freilaufkreis o. dgl., und/oder durch eine andere, einem Fachmann als sinnvoll erscheinende Maßnahme reduzieren. Insbesondere kann die Steuer- und/oder Regeleinheit nach einer Reduktion des elektrischen Ankerstroms einen Anstieg des Ankerstroms zulassen.

Durch die erfindungsgemäße Ausgestaltung der Bremsvorrichtung kann vorteilhaft eine Abbremsdauer eines Elektromotors reproduzierbar minimiert werden. Vorteilhaft können Bremsaussetzer bei einer Kurzschlussbremsung verhindert werden. Eine Erwärmung einer Ankerwicklung und ein Verschleiß eines Kommutatorsystems können vorteilhaft gering gehalten werden. Daher können weniger widerstandsfähige und somit vorteilhaft kostengünstige Bauteile verwendet werden. Vorteilhaft kann eine kostengünstige Bremsvorrichtung bereitgestellt werden, welche überlastungsfrei eine Mehrzahl von Bremsvorgängen in einer gleichen Zeitspanne als ohne eine Ankerstromreduzierung ermöglicht.

Des Weiteren wird vorgeschlagen, dass die Steuer- und/oder Regeleinheit dazu vorgesehen ist, bei einer Kurzschlussbremsung des Elektromotors eine elektrische Stromstärke des elektrischen Ankerstroms zumindest zeitweise geringer einzustellen als eine elektrische Stromstärke eines durch die Feldwicklung fließenden elektrischen Feldstroms. Vorzugsweise zeigen der elektrische Ankerstrom und der elektrische Feldstrom bei einer ungeregelten Kurzschlussbremsung des Elektromotors eine zumindest im Wesentlichen gleiche elektrische Stromstärke und einen zumindest im Wesentlichen gleichen zeitlichen Verlauf. Die Steuer- und/oder Regeleinheit ist vorzugsweise dazu vorgesehen, die elektrische Stromstärke des elektrischen Ankerstroms zu Beginn der Kurzschlussbremsung geringer einzustellen als die elektrische Stromstärke des elektrischen Feldstroms. Bevorzugt ist die Steuer- und/oder Regeleinheit dazu vorgesehen, die elektrische Stromstärke des elektrischen Ankerstroms zumindest 5 ms lang, besonders bevorzugt zumindest 10 ms lang, ab dem Beginn der Kurzschlussbremsung geringer einzustellen als die elektrische Stromstärke des elektrischen Feldstroms. Vorzugsweise kann die Steuer- und/oder Regeleinheit die elektrische Stromstärke des elektrischen Ankerstroms ab dem Beginn der Kurzschlussbremsung länger als 10 ms lang geringer einstellen als die elektrische Stromstärke des elektrischen Feldstroms, insbesondere in Abhängigkeit von der Systemauslegung und/oder der Antriebsstrangauslegung des die Bremsvorrichtung umfassenden Geräts. Insbesondere kann die Steuer- und/oder Regeleinheit nach einer Verringerung der elektrischen Stromstärke des elektrischen Ankerstroms im Vergleich zu der elektrischen Stromstärke des elektrischen Feldstroms einen Anstieg der elektrischen Stromstärke, insbesondere bis auf einen Wert der elektrischen Stromstärke des elektrischen Feldstroms, zulassen. Vorteilhaft kann die elektrische Stromstärke des elektrischen Ankerstroms reduziert werden. Vorteilhaft können Kontaktprobleme am Kommutatorsystem verhindert werden und ein reproduzierbarer Bremsverlauf erreicht werden.

Ferner wird vorgeschlagen, dass die Bremsvorrichtung zumindest eine Erfassungseinheit zumindest zu einer Erfassung des elektrischen Feldstroms umfasst. Die Erfassungseinheit ist vorzugsweise zu einer Messung des elektrischen Feldstroms, insbesondere zu einer Messung der elektrischen Stromstärke des elektrischen Feldstroms und/oder zu einer Messung des zeitlichen Verlaufs des elektrischen Feldstroms, vorgesehen. Vorzugsweise kann die Erfassungseinheit als ein, beispielsweise in einen elektrischen bzw. elektronischen Regelkreis integrierter, Bestandteil der Steuer- und/oder Regeleinheit ausgebildet sein. Insbesondere kann die Erfassungseinheit zumindest teilweise als ein Strommesswiderstand o. dgl. ausgebildet sein. Alternativ ist vorstellbar, dass die Erfassungseinheit als ein, insbesondere separat von der Steuer- und/oder Regeleinheit ausgebildetes, Strommessgerät, wie beispielsweise als ein Amperemeter o. dgl., ausgebildet ist. Vorteilhaft kann der elektrische Feldstrom, insbesondere die elektrische Stromstärke des elektrischen Feldstroms, erfasst werden.

Weiterhin wird vorgeschlagen, dass die Erfassungseinheit dazu vorgesehen ist, der Steuer- und/oder Regeleinheit zumindest eine Information über den elektrischen Feldstrom bereitzustellen und dass die Steuer- und/oder Regeleinheit dazu vorgesehen ist, in Abhängigkeit von der Information den elektrischen Ankerstrom zu steuern und/oder zu regeln. Vorzugsweise ist die Erfassungseinheit dazu vorgesehen, der Steuer- und/oder Regeleinheit die Information über den elektrischen Feldstrom als ein elektrisches Signal, insbesondere über eine elektrische Leitung, bereitzustellen. Bevorzugt ist die Erfassungseinheit dazu vorgesehen, der Steuer- und/oder Regeleinheit die, insbesondere aktuell erfasste, elektrische Stromstärke des elektrischen Feldstroms bereitzustellen. Alternativ oder zusätzlich ist denkbar, dass die Erfassungseinheit dazu vorgesehen ist, der Steuer- und/oder Regeleinheit den zeitlichen Verlauf des elektrischen Feldstroms bereitzustellen. Vorzugsweise ist die Steuer- und/oder Regeleinheit dazu vorgesehen, die Information als Eingangsgröße für eine Steuerung und/oder Regelung einer Regelgröße zu nutzen. Vorzugsweise ist die Regelgröße als der elektrische Ankerstrom, insbesondere als die elektrische Stromstärke des elektrischen Ankerstroms, ausgebildet. Die 4ieSteuer- und/oder Regeleinheit ist dazu vorgesehen, bei der Kurzschlussbremsung des Elektromotors die elektrische Stromstärke des elektrischen Ankerstroms in Abhängigkeit von der erfassten elektrischen Stromstärke des elektrischen Feldstroms zu steuern und/oder zu regeln. Die die Steuer- und/oder Regeleinheit ist dazu vorgesehen, bei der Kurzschlussbremsung des Elektromotors die elektrische Stromstärke des elektrischen Ankerstroms zumindest zeitweise geringer einzustellen als die erfasste elektrische Stromstärke des elektrischen Feldstroms. Es können sich durch eine Steuerung und/oder Regelung des elektrischen Ankerstroms in Abhängigkeit von dem elektrischen Feldstrom bei einer, aufgrund der Kurzschlussbremsung, fallenden Motordrehzahl des Elektromotors ein konstanter Feldstrom und ein steigender Ankerstrom einstellen. Vorteilhaft kann durch einen gleichbleibenden Feldstrom eine Stromreduktion am Kommutatorsystem erreicht werden, was wiederum vorteilhaft eine Mehrzahl von Bremsvorgängen eines thermisch überlastungsfreien Elektromotors ermöglicht.

Zudem wird vorgeschlagen, dass die Steuer- und/oder Regeleinheit und eine Erfassungseinheit zumindest teilweise einteilig ausgebildet sind. Bevorzugt ist die Erfassungseinheit als die Erfassungseinheit ausgebildet, welche zu der Erfassung des elektrischen Feldstroms ausgebildet ist. Alternativ ist vorstellbar, dass die Bremsvorrichtung neben der Erfassungseinheit zur Erfassung des elektrischen Feldstroms eine weitere, zumindest teilweise einteilig mit der Steuer- und/oder Regeleinheit ausgebildete Erfassungseinheit aufweist. Insbesondere ist die Erfassungseinheit zumindest teilweise, bevorzugt vollständig, in die Steuer- und/oder Regeleinheit integriert. Vorzugsweise ist die Erfassungseinheit ein Bestandteil eines durch die Steuer- und/oder Regeleinheit ausgebildeten elektrischen bzw. elektronischen Regelkreises. Vorzugsweise ist die Erfassungseinheit derart ausgebildet, dass der elektrische Feldstrom zu einer Erfassung zumindest teilweise durch die Erfassungseinheit, insbesondere durch einen als die Erfassungseinheit ausgebildeten Teil des elektrischen bzw. elektronischen Regelkreises, fließt. Vorteilhaft kann eine Bereitstellung von erfassten Informationen mit geringer Latenzzeit erfolgen. Vorteilhaft kann eine besonders genaue Ankerstromregelung ermöglicht werden.

Des Weiteren geht die Erfindung aus von einem Verfahren zu einem Betrieb einer Bremsvorrichtung, insbesondere einer erfindungsgemäßen Bremsvorrichtung.

Es wird vorgeschlagen, dass in zumindest einem Verfahrensschritt bei einer Kurzschlussbremsung eines Elektromotors ein durch eine Ankerwicklung fließender elektrischer Ankerstrom zumindest zeitweise reduziert wird. Vorteilhaft kann eine Abbremsdauer eines Elektromotors reproduzierbar minimiert werden. Vorteilhaft können Bremsaussetzer bei einer Kurzschlussbremsung verhindert werden. Eine Erwärmung einer Ankerwicklung und ein Verschleiß eines Kommutatorsystems können vorteilhaft gering gehalten werden.

Ferner wird vorgeschlagen, dass in zumindest einem Verfahrensschritt bei einer Kurzschlussbremsung des Elektromotors eine elektrische Stromstärke des elektrischen Ankerstroms zumindest zeitweise geringer eingestellt wird als eine elektrische Stromstärke eines elektrischen Feldstroms. Vorteilhaft kann die elektrische Stromstärke des elektrischen Ankerstroms reduziert werden. Vorteilhaft können Kontaktprobleme am Kommutatorsystem verhindert werden und ein reproduzierbarer Bremsverlauf erreicht werden.

Weiterhin wird vorgeschlagen, dass in zumindest einem Verfahrensschritt der elektrische Feldstrom erfasst wird. Vorteilhaft kann insbesondere die elektrische Stromstärke des elektrischen Feldstroms erfasst werden.

Zudem wird vorgeschlagen, dass in zumindest einem Verfahrensschritt zumindest eine Information über einen elektrischen Feldstrom bereitgestellt wird und dass in Abhängigkeit von der Information der elektrische Ankerstrom gesteuert und/oder geregelt wird. Vorteilhaft kann durch einen gleichbleibenden Feldstrom eine Stromreduktion am Kommutatorsystem erreicht werden, was wiederum vorteilhaft eine Mehrzahl von Bremsvorgängen eines thermisch überlastungsfreien Elektromotors ermöglicht.

Des Weiteren geht die Erfindung aus von einer Werkzeugmaschine mit zumindest einem Elektromotor und mit zumindest einer erfindungsgemäßen Bremsvorrichtung. Der Elektromotor ist vorzugsweise als ein Universalmotor ausgebildet. Die Werkzeugmaschine kann insbesondere als eine Kreissäge, als eine Stichsäge, als eine Bohrmaschine, als ein Winkelschleifer oder als eine andere, einem Fachmann als sinnvoll erscheinende Werkzeugmaschine ausgebildet sein. Vorzugsweise umfasst die Werkzeugmaschine weitere, insbesondere für einen Betrieb der Werkzeugmaschine benötigte, Bauteile. Insbesondere kann die Werkzeugmaschine zumindest eine Energieversorgungseinheit, wie beispielsweise einen Akkumulator, eine Netzspannungsversorgung o. dgl., ein Werkzeugfutter, ein Gehäuse und/oder weitere, einem Fachmann als sinnvoll erscheinende, Bauteile umfassen. Vorteilhaft kann eine langlebige, benutzersichere und kostengünstige Werkzeugmaschine bereitgestellt werden.

Die erfindungsgemäße Bremsvorrichtung, das erfindungsgemäße Verfahren und/oder die erfindungsgemäße Werkzeugmaschine sollen/soll hierbei nicht auf die oben beschriebene Anwendung und Ausführungsform beschränkt sein. Insbesondere können/kann die erfindungsgemäße Bremsvorrichtung, das erfindungsgemäße Verfahren und/oder die erfindungsgemäße Werkzeugmaschine zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Werkzeugmaschine in einer schematischen Darstellung,
- Fig. 2: eine erfindungsgemäße Bremsvorrichtung in einer schematischen Darstellung und
- Fig. 3: ein Diagramm von Stromverläufen bei einer Kurzschlussbremsung mittels der Bremsvorrichtung.

### Beschreibung des Ausführungsbeispiels

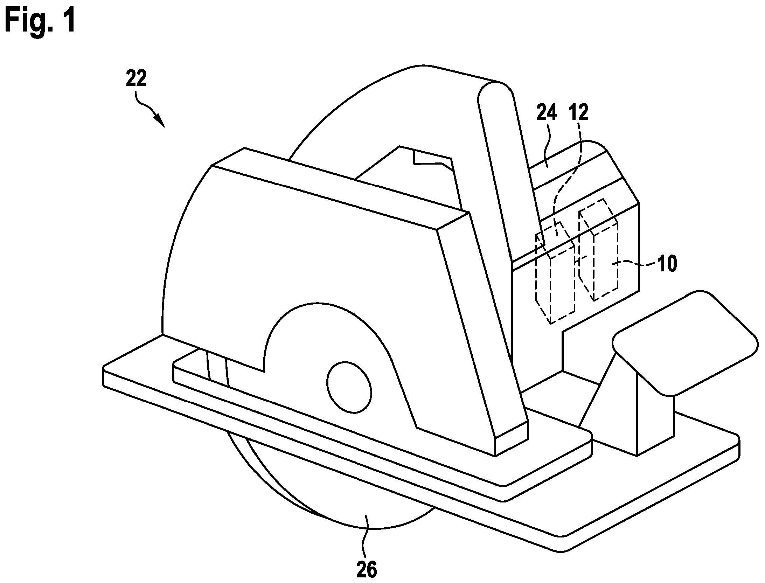

Figur 1 zeigt eine Werkzeugmaschine 22 in einer schematischen Darstellung. Die Werkzeugmaschine 22 ist als eine Handwerkzeugmaschine ausgebildet. Die Werkzeugmaschine 22 ist als eine Kreissäge ausgebildet. Alternativ ist vorstellbar, dass die Werkzeugmaschine 22 als eine Bohrmaschine, als eine Stichsäge, als ein Winkelschleifer o. dgl. ausgebildet ist. Die Werkzeugmaschine 22 weist eine Gehäuseeinheit 24 auf. Die Werkzeugmaschine 22 weist einen Elektromotor 12 auf. Der Elektromotor 12 ist als ein Universalmotor ausgebildet. Der Elektromotor 12 ist innerhalb der Gehäuseeinheit 24 angeordnet. Der Elektromotor 12 ist zu einem Antrieb eines Einsatzwerkzeugs 26 der Werkzeugmaschine 22 vorgesehen. Das Einsatzwerkzeug 26 ist als ein Kreissägeblatt ausgebildet. Die Werkzeugmaschine 22 weist eine Bremsvorrichtung 10 für den Elektromotor 12 auf. Die Bremsvorrichtung 10 ist innerhalb der Gehäuseeinheit 24 der Werkzeugmaschine 22 angeordnet.

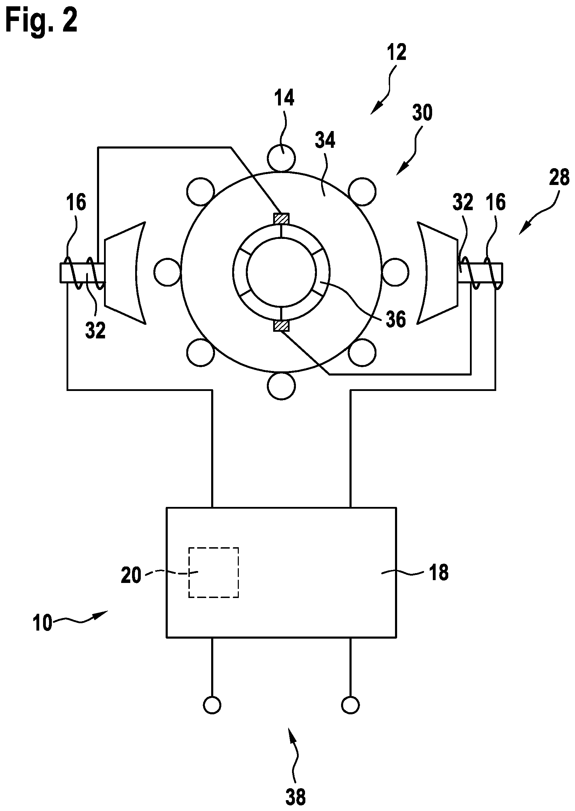

Figur 2 zeigt eine Bremsvorrichtung 10 für den Elektromotor 12 in einer schematischen Darstellung. Der Elektromotor 12 weist einen Stator 28 und einen Anker 30 auf. Der Stator 28 ist als ein statisches Bauteil ausgebildet, welches während eines Betriebs des Elektromotors 12 eigenbewegungsfrei relativ zu dem Anker 30 ist. Der Anker 30 ist als ein beweglich gelagertes Bauteil ausgebildet, welches während des Betriebs des Elektromotors 12 relativ zu dem Stator 28 bewegbar ist. Der Anker 30 ist als ein rotatorisch beweglich gelagertes Bauteil ausgebildet, welches während des Betriebs des Elektromotors 12 relativ zu dem Stator 28 drehbar ist. Der Stator 28 weist einen Statorgrundkörper 32 auf. Der Anker 30 weist einen Ankergrundkörper 34 auf. Der Statorgrundkörper 32 und der Ankergrundkörper 34 sind jeweils aus einer Mehrzahl von miteinander verbundenen Schichten aus Elektroblech ausgebildet. Der Elektromotor 12 weist eine Ankerwicklung 14 und eine Feldwicklung 16 auf. Die Ankerwicklung 14 ist aus einem langgestreckten elektrisch leitfähigen Leitungselement gebildet. Die Feldwicklung 16 ist aus zwei weiteren langgestreckten elektrisch leitfähigen Leitungselementen gebildet. Die Leitungselemente sind jeweils aus einem elektrisch leitfähigen Draht gebildet. Die Leitungselemente weisen jeweils eine elektrisch isolierende Isolationsschicht auf. Die zwei weiteren Leitungselemente sind zu einer Bildung der Feldwicklung 16 im Wesentlichen spulenartig um den Statorgrundkörper 32 gewickelt. Das eine Leitungselement ist zur Bildung der Ankerwicklung 14 im Wesentlichen spulenartig um den Ankergrundkörper 34 gewickelt.

Der Elektromotor 12 ist als ein Innenläufermotor ausgebildet. Der Anker 30 des als ein Innenläufermotor ausgebildeten Elektromotors 12 rotiert bei einem Betrieb des Innenläufermotors umgeben von dem Stator 28 des als ein Innenläufermotor ausgebildeten Elektromotors 12. Der Elektromotor 12 ist als ein Universalmotor ausgebildet. Der Elektromotor 12 ist sowohl mit elektrischer Gleichspannung als auch mit elektrischer Wechselspannung betreibbar. Der Elektromotor 12 weist ein Kommutatorsystem 36 auf. Das Kommutatorsystem 36 ist zu einer korrekten Bestromung der Ankerwicklung 14 vorgesehen. Der Anker 30 kann durch eine korrekte Bestromung des Elektromotors 12 in eine Rotation versetzt werden. Der Elektromotor 12 kann mittels des rotierenden Ankers 30 beispielsweise eine Antriebswelle der Werkzeugmaschine 22 o. dgl. antreiben. Zu einer Kurzschlussbremsung des Elektromotors 12 wird der Elektromotor 12 elektrisch kurzgeschlossen. Zu einer Kurzschlussbremsung des Elektromotors 12 werden die Feldwicklung 16 und die Ankerwicklung 14 elektrisch kurzgeschlossen. Bei einem Kurzschluss des Elektromotors 12 wirkt eine gegenelektromotorische Kraft, welche einen elektrischen Kurzschlussstrom bewirkt. Ein bei einer Kurzschlussbremsung des Elektromotors 12 durch die Ankerwicklung 14 fließender elektrischer Kurzschlussstrom ist ein elektrischer Ankerstrom. Ein bei einer Kurzschlussbremsung des Elektromotors 12 durch die Feldwicklung 16 fließender elektrischer Kurzschlussstrom ist ein elektrischer Feldstrom.

Die Bremsvorrichtung 10 weist eine Steuer- und/oder Regeleinheit 18 auf. Die Steuer- und/oder Regeleinheit 18 ist zu einer Steuerung und/oder Regelung eines elektrischen Stroms durch die Ankerwicklung 14 und/oder durch die Feldwicklung 16 vorgesehen. Die Steuer- und/oder Regeleinheit 18 ist dazu vorgesehen, bei einer Kurzschlussbremsung des Elektromotors 12 einen durch die Ankerwicklung 14 fließenden elektrischen Ankerstrom zumindest zeitweise zu reduzieren. Die Steuer- und/oder Regeleinheit 18 ist als ein elektronischer Regelkreis ausgebildet. Alternativ ist denkbar, dass die Steuer- und/oder Regeleinheit 18 als ein Mikroprozessor, als ein Mikrorechner, als ein elektrischer Regelkreis, als ein integrierter Schaltkreis o. dgl. ausgebildet ist. Die Steuer- und/oder Regeleinheit 18 ist zu einer Steuerung und/oder Regelung der Bestromung des Elektromotors 12 bei einem Betrieb des Elektromotors 12 vorgesehen. Die Steuer- und/oder Regeleinheit 18 kann einen elektrischen Energiefluss von einer Energieversorgungseinheit 38 an den Elektromotor 12 steuern und/oder regeln. Die Energieversorgungseinheit 38 kann als ein Akkumulator, als eine Netzspannungsversorgung o. dgl. ausgebildet sein. Alternativ ist vorstellbar, dass die Steuer- und/oder Regeleinheit 18 lediglich zu einer Steuerung und/oder Regelung einer Kurzschlussbremsung vorgesehen ist. Die Steuer- und/oder Regeleinheit 18 ist dazu vorgesehen, die Kurzschlussbremsung einzuleiten. Die Steuer- und/oder Regeleinheit 18 ist dazu vorgesehen, die Kurzschlussbremsung in Abhängigkeit eines Signals, beispielsweise von einem Sensor, von einem Benutzer o. dgl. einzuleiten. Die Steuer- und/oder Regeleinheit 18 ist dazu vorgesehen, bei einer Kurzschlussbremsung des Elektromotors 12 eine elektrische Stromstärke des elektrischen Ankerstroms zumindest zeitweise zu reduzieren. Die Steuer- und/oder Regeleinheit 18 ist dazu vorgesehen, den elektrischen Ankerstrom im Vergleich zu einem elektrischen Ankerstrom bei gleichen Betriebsparametern und einer ungeregelten Kurzschlussbremsung des Elektromotors 12 zumindest zeitweise zu reduzieren. Die Steuer- und/oder Regeleinheit 18 ist dazu vorgesehen, den elektrischen Ankerstrom zu Beginn der Kurzschlussbremsung zu reduzieren. Die Steuer- und/oder Regeleinheit 18 ist dazu vorgesehen, den elektrischen Ankerstrom bevorzugt zumindest 5 ms lang, besonders bevorzugt zumindest 10 ms lang, ab dem Beginn der Kurzschlussbremsung zu reduzieren. Die Steuer- und/oder Regeleinheit 18 kann den elektrischen Ankerstrom ab dem Beginn der Kurzschlussbremsung länger als 10 ms lang reduzieren, insbesondere in Abhängigkeit von einer Systemauslegung und/oder einer Antriebsstrangauslegung der Werkzeugmaschine 22. Die Steuer- und/oder Regeleinheit 18 kann den elektrischen Ankerstrom durch eine Ansteuerung von elektrischen bzw. elektronischen Bauteilen der Bremsvorrichtung 10, wie beispielsweise Widerständen, Dioden, Kondensatoren, Transistoren, insbesondere MOSFETs und/oder IGBTs, o. dgl., durch eine zumindest teilweise Ableitung des elektrischen Ankerstroms, beispielsweise in einen Freilaufkreis o. dgl., und/oder dergleichen Maßnahme reduzieren. Die Steuer- und/oder Regeleinheit 18 kann nach einer Reduktion des elektrischen Ankerstroms einen Anstieg des Ankerstroms zulassen.

Die Steuer- und/oder Regeleinheit 18 ist dazu vorgesehen ist, bei einer Kurzschlussbremsung des Elektromotors 12 eine elektrische Stromstärke des elektrischen Ankerstroms zumindest zeitweise geringer einzustellen als eine elektrische Stromstärke eines durch die Feldwicklung 16 fließenden elektrischen Feldstroms. Der elektrische Ankerstrom und der elektrische Feldstrom zeigen bei einer ungeregelten Kurzschlussbremsung des Elektromotors 12 eine zumindest im Wesentlichen gleiche elektrische Stromstärke und einen zumindest im Wesentlichen gleichen zeitlichen Verlauf. Die Steuer- und/oder Regeleinheit 18 ist dazu vorgesehen, die elektrische Stromstärke des elektrischen Ankerstroms zu Beginn der Kurzschlussbremsung geringer einzustellen als die elektrische Stromstärke des Feldstroms. Die Steuer- und/oder Regeleinheit 18 ist dazu vorgesehen, die elektrische Stromstärke des elektrischen Ankerstroms bevorzugt zumindest 5 ms lang, besonders bevorzugt zumindest 10 ms lang, ab dem Beginn der Kurzschlussbremsung geringer einzustellen als die elektrische Stromstärke des elektrischen Feldstroms. Die Steuer- und/oder Regeleinheit 18 kann die elektrische Stromstärke des elektrischen Ankerstroms ab dem Beginn der Kurzschlussbremsung länger als 10 ms lang geringer einstellen als die elektrische Stromstärke des elektrischen Feldstroms, insbesondere in Abhängigkeit von der Systemauslegung und/oder der Antriebsstrangauslegung der Werkzeugmaschine 22. Die Steuer- und/oder Regeleinheit 18 kann nach einer Verringerung der elektrischen Stromstärke des elektrischen Ankerstroms im Vergleich zu der elektrischen Stromstärke des elektrischen Feldstroms einen Anstieg der elektrischen Stromstärke zulassen. Die Steuer- und/oder Regeleinheit 18 kann nach einer Verringerung der elektrischen Stromstärke des elektrischen Ankerstroms im Vergleich zu der elektrischen Stromstärke des elektrischen Feldstroms einen Anstieg der elektrischen Stromstärke bis auf einen Wert der elektrischen Stromstärke des elektrischen Feldstroms zulassen.

Die Bremsvorrichtung 10 umfasst eine Erfassungseinheit 20 zu einer Erfassung des elektrischen Feldstroms. Die Erfassungseinheit 20 ist zu einer Messung der elektrischen Stromstärke des elektrischen Feldstroms und/oder zu einer Messung des zeitlichen Verlaufs des elektrischen Feldstroms vorgesehen. Die Erfassungseinheit 20 ist als ein Bestandteil der Steuer- und/oder Regeleinheit 18 ausgebildet. Alternativ ist denkbar, dass die Erfassungseinheit 20 separat von der Steuer- und/oder Regeleinheit 18 ausgebildet ist. Die Erfassungseinheit 20 ist als ein Strommesswiderstand ausgebildet. Alternativ ist vorstellbar, dass die Erfassungseinheit 20 als ein Strommessgerät, wie beispielsweise als ein Amperemeter o. dgl., ausgebildet ist.

Die Erfassungseinheit 20 ist dazu vorgesehen, der Steuer- und/oder Regeleinheit 18 zumindest eine Information über den elektrischen Feldstrom bereitzustellen. Die Steuer- und/oder Regeleinheit 18 ist dazu vorgesehen ist, in Abhängigkeit von der Information den elektrischen Ankerstrom zu steuern und/oder zu regeln. Die Erfassungseinheit 20 ist dazu vorgesehen, der Steuer- und/oder Regeleinheit 18 die Information über den elektrischen Feldstrom als ein elektrisches Signal bereitzustellen. Die Erfassungseinheit 20 ist dazu vorgesehen, der Steuer- und/oder Regeleinheit 18 eine aktuell erfasste elektrische Stromstärke des elektrischen Feldstroms bereitzustellen. Alternativ oder zusätzlich ist denkbar, dass die Erfassungseinheit 20 dazu vorgesehen ist, der Steuer- und/oder Regeleinheit 18 den zeitlichen Verlauf des elektrischen Feldstroms bereitzustellen. Die Steuer- und/oder Regeleinheit 18 ist dazu vorgesehen, die Information als Eingangsgröße für eine Steuerung und/oder Regelung einer Regelgröße zu nutzen. Die Regelgröße ist als der elektrische Ankerstrom ausgebildet. Die Regelgröße ist als die elektrische Stromstärke des elektrischen Ankerstroms ausgebildet. Die Steuer- und/oder Regeleinheit 18 ist dazu vorgesehen, bei der Kurzschlussbremsung des Elektromotors 12 die elektrische Stromstärke des elektrischen Ankerstroms in Abhängigkeit von der erfassten elektrischen Stromstärke des elektrischen Feldstroms zu steuern und/oder zu regeln. Die Steuer- und/oder Regeleinheit 18 ist dazu vorgesehen, bei der Kurzschlussbremsung des Elektromotors 12 die elektrische Stromstärke des elektrischen Ankerstroms zumindest zeitweise geringer einzustellen als die erfasste elektrische Stromstärke des elektrischen Feldstroms. Vorzugsweise können sich durch eine Steuerung und/oder Regelung des elektrischen Ankerstroms in Abhängigkeit von dem elektrischen Feldstrom bei einer aufgrund der Kurzschlussbremsung fallenden Motordrehzahl des Elektromotors 12 ein konstanter Feldstrom und ein steigender Ankerstrom einstellen.

Die Steuer- und/oder Regeleinheit 18 und eine Erfassungseinheit 20 sind zumindest teilweise einteilig ausgebildet. Die Erfassungseinheit 20 ist als die Erfassungseinheit 20 ausgebildet, welche zu der Erfassung des elektrischen Feldstroms ausgebildet ist. Alternativ ist vorstellbar, dass die Bremsvorrichtung 10 neben der Erfassungseinheit 20 zur Erfassung des elektrischen Feldstroms eine weitere, zumindest teilweise einteilig mit der Steuer- und/oder Regeleinheit 18 ausgebildete Erfassungseinheit aufweist. Die Erfassungseinheit 20 ist zumindest teilweise in die Steuer- und/oder Regeleinheit 18 integriert. Die Erfassungseinheit 20 ist vollständig in die Steuer- und/oder Regeleinheit 18 integriert. Die Erfassungseinheit 20 ist ein Bestandteil des durch die Steuer- und/oder Regeleinheit 18 ausgebildeten elektronischen Regelkreises. Die Erfassungseinheit 20 ist derart ausgebildet, dass der elektrische Feldstrom zu einer Erfassung zumindest teilweise durch die Erfassungseinheit 20 fließt. Der elektrische Feldstrom fließt durch einen als die Erfassungseinheit 20 ausgebildeten Teil des elektronischen Regelkreises.

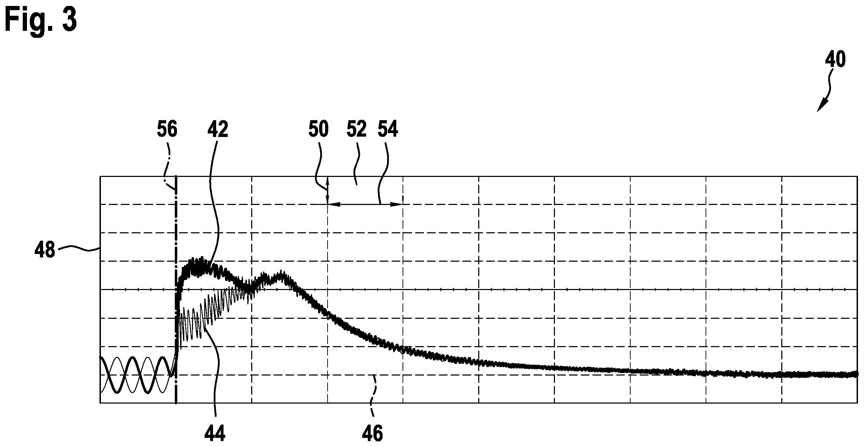

Figur 3 zeigt ein Diagramm 40 von Stromverläufen 42, 44 bei einer Kurzschlussbremsung mittels der Bremsvorrichtung 10. Das Diagramm 40 weist eine Abszissenachse 46 und eine Ordinatenachse 48 auf. Auf der Abszissenachse 46 ist eine Zeitdauer angetragen. Auf der Ordinatenachse 48 ist eine elektrische Stromstärke angetragen. Eine Höhe 50 eines Kästchens 52 entspricht einer elektrischen Stromstärke von 10 A. Eine Breite 54 des Kästchens 52 entspricht einer Zeitdauer von 50 ms. Eine gestrichelte Linie 56 markiert den Beginn der Kurzschlussbremsung. Der elektrische Feldstrom ist durch einen ersten Stromverlauf 42 dargestellt. Der elektrische Ankerstrom ist durch einen zweiten Stromverlauf 44 dargestellt. Zeitlich vor der Kurzschlussbremsung weisen der elektrische Feldstrom und der elektrische Ankerstrom im Wesentlichen gleiche elektrische Stromstärken von maximal ca. 5 A auf. Zeitlich vor der Kurzschlussbremsung verlaufen der elektrische Feldstrom und der elektrische Ankerstrom phasenversetzt zueinander. Zu Beginn der Kurzschlussbremsung wird der elektrische Ankerstrom durch die Steuer- und/oder Regeleinheit 18 reduziert. Die elektrische Stromstärke des elektrischen Ankerstroms ist geringer eingestellt als die elektrische Stromstärke des elektrischen Feldstroms. Nach einem Anstieg des elektrischen Feldstroms zu Beginn der Kurzschlussbremsung verläuft der elektrische Feldstrom bis ca. 70 ms nach Beginn der Kurzschlussbremsung im Wesentlichen konstant. Nach der Reduktion zu Beginn der Kurzschlussbremsung steigt der elektrische Ankerstrom an bis er deckungsgleich mit dem elektrischen Feldstrom verläuft. Ab ca. 70 ms nach der Kurzschlussbremsung sinkt sowohl die elektrische Stromstärke des elektrischen Feldstroms als auch die elektrische Stromstärke des elektrischen Ankerstroms exponentiell ab.

Im Folgenden wird ein Verfahren zu einem Betrieb der Bremsvorrichtung 10 beschrieben. In zumindest einem Verfahrensschritt wird bei einer Kurzschlussbremsung des Elektromotors 12 der durch die Ankerwicklung 14 fließende elektrische Ankerstrom zumindest zeitweise reduziert. In zumindest einem weiteren Verfahrensschritt wird bei einer Kurzschlussbremsung des Elektromotors 12 die elektrische Stromstärke des elektrischen Ankerstroms zumindest zeitweise geringer eingestellt als die elektrische Stromstärke des elektrischen Feldstroms. In zumindest einem weiteren Verfahrensschritt wird der elektrische Feldstrom erfasst. In zumindest einem weiteren Verfahrensschritt wird zumindest eine Information über den elektrischen Feldstrom bereitgestellt und in Abhängigkeit von der Information der elektrische Ankerstrom gesteuert und/oder geregelt. Hinsichtlich weiterer Verfahrensschritte des Verfahrens zum Betrieb der Bremsvorrichtung 10 darf auf die vorhergehende Beschreibung der Bremsvorrichtung 10 verwiesen werden, da diese Beschreibung analog auch auf das Verfahren zu lesen ist und somit alle Merkmale hinsichtlich der Bremsvorrichtung 10 auch in Bezug auf das Verfahren zum Betrieb der Bremsvorrichtung 10 als offenbart gelten.

## Patentansprüche

1. Bremsvorrichtung (10) für einen Elektromotor (12), welcher zumindest eine Ankerwicklung (14) und zumindest eine Feldwicklung (16) aufweist, mit zumindest einer Steuer- oder Regeleinheit (18) zumindest zu einer Steuerung oder Regelung eines elektrischen Ankerstroms durch die Ankerwicklung (14) und eines elektrischen Feldstroms durch die Feldwicklung (16), wobei die Bremsvorrichtung (10) eine Erfassungseinheit (20) aufweist, die dazu vorgesehen ist, der Steuer- oder Regeleinheit (18) zumindest eine Information über den elektrischen Feldstrom bereitzustellen, und wobei die Steuer- oder Regeleinheit (18) dazu vorgesehen ist, bei einer Kurzschlussbremsung des Elektromotors (12) den elektrischen Ankerstrom in Abhängigkeit von der Information über den elektrischen Feldstrom derart zu steuern oder zu regeln, dass er zumindest zeitweise reduziert wird und seine elektrische Stromstärke zu Beginn der Kurzschlussbremsung geringer eingestellt wird als die elektrische Stromstärke des elektrischen Feldstroms, **dadurch gekennzeichnet, dass** die Steuer- oder Regeleinheit (18) den elektrischen Ankerstroms ferner derart steuert oder regelt, dass sich bei einer aufgrund der Kurzschlussbremsung fallenden Motordrehzahl des Elektromotors (12) zumindest zeitweise ein konstanter Feldstrom und ein steigender Ankerstrom einstellt.

2. Bremsvorrichtung nach Anspruch 1, **dadurch gekennzeichnet, dass** die Steuer- oder Regeleinheit (18) und die Erfassungseinheit (20) zumindest teilweise einteilig ausgebildet sind.

3. Werkzeugmaschine (22) mit zumindest einem Elektromotor (12) und mit zumindest einer Bremsvorrichtung (10) nach einem der vorhergehenden Ansprüche.

4. Verfahren zu einem Betrieb einer Bremsvorrichtung (10) für einen Elektromotor (12), welcher zumindest eine Ankerwicklung (14) und zumindest eine Feldwicklung (16) aufweist, wobei in einem Verfahrensschritt zumindest eine Information über einen elektrischen Feldstrom der Feldwicklung (16) erfasst wird und in einem weiteren Verfahrensschritt bei einer Kurzschlussbremsung des Elektromotors (12) der durch die Ankerwicklung (14) fließende elektrische Ankerstrom zumindest zeitweise in Abhängigkeit von der Information über den elektrischen Feldstrom reduziert wird und die elektrische Stromstärke des elektrischen Ankerstroms zumindest zeitweise geringer eingestellt wird als die elektrische Stromstärke des elektrischen Feldstroms, **dadurch gekennzeichnet, dass** der elektrische Ankerstrom ferner derart gesteuert oder geregelt wird, dass sich bei einer aufgrund der Kurzschlussbremsung fallenden Motordrehzahl des Elektromotors (12) zumindest zeitweise ein konstanter Feldstrom und ein steigender Ankerstrom einstellt.

## Claims

1. Brake device (10) for an electric motor (12) which has at least one armature winding (14) and at least one field winding (16), having at least one open-loop or closed-loop control unit (18) at least for open-loop or closed-loop control of an electric armature current through the armature winding (14) and of an electric field current through the field winding (16), wherein the brake device (10) has a detection unit (20) which is intended to provide the open-loop or closed-loop control unit (18) with at least one item of information about the electric field current, and wherein the open-loop or closed-loop control unit (18) is intended, in the event of short-circuit braking of the electric motor (12), to control the electric armature current in an open-loop or closed-loop manner on the basis of the information about the electric field current in such a way that said electric armature current is at least temporarily reduced and its electric current strength is set, at the beginning of the short-circuit braking, to be lower than the electric current strength of the electric field current, **characterized in that** the open-loop or closed-loop control unit (18) further controls the electric armature current in an open-loop or closed-loop manner in such a way that a constant field current and an increasing armature current are at least temporarily set when the motor speed of the electric motor (12) falls due to the short-circuit braking.

2. Brake device according to Claim 1, **characterized in that** the open-loop or closed-loop control unit (18) and the detection unit (20) are designed to be at least partially in one piece.

3. Power tool (22) having at least one electric motor (12) and having at least one brake device (10) according to either of the preceding claims.

4. Method for operating a brake device (10) for an electric motor (12) which has at least one armature winding (14) and at least one field winding (16), wherein, in one method step, at least one item of information about an electric field current of the field winding (16) is detected and, in a further method step, in the event of short-circuit braking of the electric motor (12), the electric armature current flowing through the armature winding (14) is at least temporarily reduced on the basis of the information about the electric field current, and the electric current strength of the electric armature current is at least temporarily set to be lower than the electric current strength of the electric field current, **characterized in that** the electric armature current is further controlled in an open-loop or closed-loop manner in such a way that a constant field current and an increasing armature current are at least temporarily set when the motor speed of the electric motor (12) falls due to the short-circuit braking.

## Revendications

1. Dispositif de freinage (10) pour un moteur électrique (12), qui comporte au moins un enroulement d'induit (14) et au moins un enroulement de champ (16), avec au moins une unité de commande ou de régulation (18) destinée au moins à commander ou à réguler un courant d'induit électrique à travers l'enroulement d'induit (14) et un courant de champ électrique à travers l'enroulement de champ (16), le dispositif de freinage (10) comportant une unité de détection (20), qui est prévue pour fournir au moins une information sur le courant de champ électrique à l'unité de commande ou de régulation (18) et l'unité de commande ou de régulation (18) étant prévue pour commander ou réguler, lors du freinage par court-circuit du moteur électrique (12) , en fonction de l'information sur le courant de champ électrique, le courant d'induit électrique de telle manière qu'il est réduit au moins temporairement et que son intensité de courant électrique au début du freinage par court-circuit est réglée sur une valeur inférieure à l'intensité de courant électrique du champ de courant électrique, **caractérisé en ce que** l'unité de commande ou de régulation (18) commande ou régule en outre le courant d'induit électrique de telle manière qu'un courant de champ constant et un courant d'induit croissant sont réglés au moins temporairement en cas de diminution de la vitesse de rotation du moteur électrique (12) due au freinage par court-circuit.

2. Dispositif de freinage selon la revendication 1, **caractérisé en ce que** l'unité de commande ou de régulation (18) et l'unité de détection (20) sont formées au moins en partie d'une seule pièce.

3. Machine-outil (22) avec au moins un moteur électrique (12) et avec au moins un dispositif de freinage (10) selon l'une des revendications précédentes.

4. Procédé pour faire fonctionner un dispositif de freinage (10) pour un moteur électrique (12), qui comporte au moins un enroulement d'induit (14) et au moins un enroulement de champ (16), au moins une information sur un courant de champ électrique de l'enroulement de champ (16) étant détectée dans une étape de procédé et le courant d'induit électrique circulant à travers l'enroulement d'induit (14) étant réduit au moins temporairement en fonction de l'information sur le courant de champ électrique dans une autre étape de procédé lors d'un freinage par court-circuit du moteur électrique (12), et l'intensité de courant électrique du courant d'induit électrique étant réglée au moins temporairement sur une valeur inférieure à l'intensité de courant électrique du courant de champ électrique, **caractérisé en ce que** le courant d'induit électrique est en outre commandé ou régulé de telle manière qu'un courant de champ constant et un courant d'induit croissant sont réglés au moins temporairement en cas de diminution de la vitesse de rotation du moteur électrique (12) due au freinage par court-circuit.
